# EUROPÄISCHE PATENTSCHRIFT

(11) **EP 1 501 880 B1**
(45) Veröffentlichungstag und Bekanntmachung des Hinweises auf die Patenterteilung: **15.02.2006**
(21) Anmeldenummer: 03747101.8
(22) Anmeldetag: 15.04.2003
(51) Int. Cl.: C08F 251/00

(54) **WÄSSRIGE POLYMERDISPERSIONEN AUF BASIS VON COPOLYMERISATEN AUS VINYLAROMATEN UND BUTADIEN, VERFAHREN ZU IHRER HERSTELLUNG UND IHRE VERWENDUNG ALS LEIMUNGSMITTEL FÜR PAPIER**
AQUEOUS POLYMER DISPERSIONS, BASED ON COPOLYMERS OF VINYL AROMATICS AND BUTADIENE, METHOD FOR THEIR PRODUCTION AND THEIR USE AS SIZING AGENTS FOR PAPER
DISPERSIONS POLYMERES AQUEUSES A BASE DE COPOLYMERES DE VINYLAROMATIQUES ET DE BUTADIENE, LEUR PROCEDE DE PRODUCTION ET LEUR UTILISATION EN TANT QU'AGENTS COLLANTS POUR PAPIER

(30) Priorität: 24.04.2002 DE 10218418
(43) Veröffentlichungstag der Anmeldung: 02.02.2005
(73) Patentinhaber: BASF Aktiengesellschaft, 67056 Ludwigshafen (DE)
(72) Erfinder: ETTL, Roland, 68775 Ketsch (DE); HAMERS, Christoph, 67071 Ludwigshafen (DE); SCHMIDT-THÜMMES, Jürgen, 67141 Neuhofen (DE)
(86) Internationale Anmeldenummer: PCT/EP2003/003898
(87) Internationale Veröffentlichungsnummer: WO 2003/091300

(56) Entgegenhaltungen:
- EP-A- 0 408 099
- US-A- 4 003 871
- US-A- 4 041 227

## Beschreibung

Die Erfindung betrifft wäßrige Polymerdispersionen auf Basis von Copolymerisaten aus Vinylaromaten und Butadien, Verfahren zu ihrer Herstellung und ihre Verwendung als Masse- und Oberflächenleimungsmittel für Papier.

Die Verwendung wäßriger Polymerdispersionen als Leimungsmittel und als Beschichtungsmittel für Papier ist bereits bekannt. Auch die Verwendung von Stärke und/oder Stärkederivaten zur Stabilisierung der Polymerteilchen solcher Leimungsmittel ist in der Literatur beschrieben. So wird beispielsweise in der JP-A-58/115,196 die Herstellung von Pfropfcopolymerisaten beschrieben, die durch Polymerisieren von 5-85 Gew.-% Styrol und 2-50 Gew.-% (Meth)acrylaten in Gegenwart von wasserlöslichen Polymeren, wie Stärke, erhältlich sind. Die so herstellbaren wäßrigen Dispersionen werden als Leimungsmittel für Papier verwendet.

Aus der EP-A-0 257 412 sind Leimungsmittel für Papier bekannt, die durch Polymerisieren einer Monomermischung von 20-65 Gew.-% Acrylnitril, 80-35 Gew.-% mindestens eines Acrylsäureesters und von 0-10 Gew.-% anderer ethylenisch ungesättigter Monomere in wässriger Phase in Gegenwart einer abgebauten Stärke mit einer reduzierten Viskosität von 0,12-0,5 dl/g und Redoxinitiatoren erhältlich sind.

Nach der Lehre der EP-A-0 276 770 werden Leimungsmittel auf Basis von Copolymerisaten aus Acrylnitril und Acrylsäureestern durch Polymerisieren der Monomeren in wäßrigem Medium in Gegenwart einer abgebauten Stärke mit einer reduzierten Viskosität von 0,04 bis weniger als 0,12 dl/g und von Redoxkatalysatoren hergestellt.

Aus der EP-A-0 307 816 ist ein Verfahren zur Verbesserung der Bedruckbarkeit von Papier bekannt, wobei man ein wäßriges Beschichtungsmittel aus einem Pigment, einer kationischen wäßrigen Polymersdispersion eines Papierleimungsmittels und eines die Ausbildung der Oberflächenleimung störenden oberflächenaktiven Stoffs und/oder eines polymeren Dispergiemittels ein- oder beidseitig auf die Oberfläche des Papiers aufträgt.

Die EP-A-0 735 065 beschreibt die Herstellung einer amphoteren Polymerdispersion über eine zweistufige Polymerisation. In der ersten Stufe werden ethylenisch ungesättigte Monomere und bis zu 30 Gew.-% ungesättigte Carbon-, Sulfon- oder Phosphonsäuren in Gegenwart von enzymatisch oder hydrolytisch abgebauter Stärke und/oder Stärkederivate polymerisiert. In einer zweiten Stufe werden weitere ethylenisch ungesättigte und bis zu 35 Gew.% kationische Monomere polymerisiert.

Gegenstand der DE-A-198 53 489 ist die Verwendung von wäßrigen Styrol/Butadien-Dispersionen, die durch radikalische Polymerisation von Styrol und Butadien in Gegenwart von Schutzkolloiden wie Polyvinylalkohol oder wasserlöslichen Polysacchariden hergestellt werden, in Baukleberrezepturen.

Der Erfindung liegt die Aufgabe zugrunde, neue Stoffe zur Verfügung zu stellen, die beispielsweise für die Masse- und Oberflächenleimung von Papier geeignet sind.

Die Aufgabe wird erfindungsgemäß gelöst mit wäßrigen Polymerdispersionen auf Basis von Copolymerisaten aus Vinylaromaten und Butadien, die erhältlich sind durch radikalisch initiierte Copolymerisation von
(a) 0,1 bis 99,9 Gew.-% Styrol und/oder Methylstyrol,
(b) 0,1-99,9 Gew.-% Butadien-1,3 und/oder Isopren und
(c) 0 bis 40 Gew.-% anderen ethylenisch ungesättigten copolymerisierbaren Monomeren, wobei die Summe der Monomeren (a), (b) und (c) immer 100 beträgt,

in Gegenwart von 10 bis 40 Gew.-%, bezogen auf die eingesetzten Monomeren, mindestens einer abgebauten Stärke mit einem Molgewicht Mn von 500 bis 40.000 und von wasserlöslichen Redoxkatalysatoren, wobei man als Redoxkatalysator eine Kombination aus Wasserstoffperoxid und mindestens einem Schwermetallsalz aus der Reihe der Cer-, Mangan- und Eisen (II) salze einsetzt.

Gegenstand der Erfindung ist außerdem ein Verfahren zur Herstellung von wäßrigen Copolymerdispersionen auf Basis von Vinylaromaten und Butadien durch Copolymerisieren von Vinylaromaten und Butadien in wäßrigem Medium in Gegenwart von Stärke und wasserlöslichen Redoxkatalysatoren, das dadurch gekennzeichnet ist, daß man bei der Copolymerisation
(a) 0,1 bis 99,9 Gew.-% Styrol und/oder Methylstyrol,
(b) 0,1-99,9 Gew.-% Butadien-1,3 und/oder Isopren und
(c) 0 bis 40 Gew.-% anderen ethylenisch ungesättigten copolymerisierbaren Monomeren einsetzt,

wobei die Summe der Monomeren (a), (b) und (c) immer 100 beträgt, und die Copolymerisation in Gegenwart von 10 bis 40 Gew.-%, bezogen auf die eingesetzten Monomeren, mindestens einer abgebauten Stärke mit einem Molgewicht Mn von 500 bis 40.000 durchführt und man als Redoxkatalysator eine Kombination aus Wasserstoffperoxid und mindestens einem Schwermetallsalz aus der Reihe der Cer-, Mangan- und Eisen (II) salze einsetzt.

Bei dem erfindungsgemäßen Verfahren polymerisiert man vorzugsweise eine Monomermischung aus
(a) 50 bis 99 Gew.-% Styrol und /oder Methylstyrol,
(b) 1 bis 50 Gew.-% Butadien und/oder Isopren und
(c) 0 bis 40 Gew.-% anderen ethylenisch ungesättigten copolymerisierbaren Monomeren

in einer wäßrigen Lösung einer enzymatisch abgebauten nativen Stärke mit einem Redoxkatalysator aus Wasserstoffperoxid und Schwermetallionen aus der Gruppe der Cer-, Mangan- und Eisen (II) salze.

Gegenstand der Erfindung ist außerdem die Verwendung der oben beschriebenen wäßrigen Polymerdispersionen als Masse- und/oder Oberflächenleimungsmittel für Papier, Pappe und Karton.

Als Monomere der Gruppe (a) kommen beispielsweise Styrol sowie substituierte Styrole wie α-Methylstyrol und Mischungen der genannten Monomeren in Betracht. Die bei der Polymerisation eingesetzte Monomermischung enthält die Vinylaromaten der Gruppe (a) vorzugsweise in einer Menge von 50,0 bis 99,9 Gew.-%, insbesondere von 75 bis 99 Gew.-%. Als Vinylaromat wird Styrol bevorzugt bei der Copolymerisation eingesetzt.

Als Monomere der Gruppe (b) geeignet sind Butadien-1,3 sowie substituierte Butadiene wie 2-Chlor-Butadien oder Mischungen daraus. Die Monomeren der Gruppe (b) sind in der Monomermischung vorzugsweise zu 0,1 bis 50 Gew.-%, besonders bevorzugt 1 bis 25 Gew.-% enthalten.

Als Monomere der Gruppe (c) geeignet sind anionische, kationische und/oder nicht-ionische hydrophile ethylenisch ungesättigte Monomere. Beispiele für anionische Monomere sind: Acrylsäure, Methacrylsäure, Ethacrylsäure, Crotonsäure, Vinylessigsäure, Itaconsäure, Styrolsulfonsäure, Acrylamido-2-methyl-propansulfonsäure, Vinylsulfonat, Vinylphosponsäure, und/oder Maleinsäure und deren Halbester sowie die Alkali- und Ammoniumsalze dieser Monomere. Man kann auch Mischungen dieser Monomeren bei der Copolymerisation einsetzen.

Die geeigneten Monomeren (c) sind vorzugsweise wasserlöslich. Sie weisen beispielsweise eine Löslichkeit von mindestens 50 g/l Wasser bei einer Temperatur von 20°C auf. Geeignete Monomere (c) sind beispielsweise Acrylamid, Methacrylamid, N-Vinylformamid, N-Vinylacetamid, N-Vinylpyrrolidon, N-Vinyloxazolidon, Methylpolyglykolacrylate, Methylpolyglykolmethacrylate.

Geeignete kationische Monomere sind z.B. Dialkylaminoalkylacrylamide, -ester und/oder -methacrylamide und/oder -methacrylester. Beispiele hierfür sind Ester von ethylenisch ungesättigten Carbonsäuren mit Aminoalkoholen wie beispielsweise Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Dimethylaminobutylacrylat und Diethylaminobutylacrylat. Die basischen Acrylate können in Form der freien Basen, der Salze mit Mineralsäuren wie Salzsäure, Schwefelsäure oder Salpetersäure, der Salze mit organischen Säuren wie Ameisensäure, Essigsäure, Propionsäure oder der Sulfonsäuren oder in quaternierter Form eingesetzt werden. Geeignete Quaternierungsmittel sind beispielsweise Dimethylsulfat, Diethylsulfat, Methylchlorid,Ethylchlorid oder Benzylchlorid.

Weitere geeignete Comonomere sind Amide ethylenisch ungesättigter Carbonsäuren wie Acrylamid, Methacrylamid sowie N-Alkylmono- und Diamide von monoethylenisch ungesättigten Carbonsäuren mit Alkylresten von 1 bis 6 C-Atomen, z.B. N-Methylacrylamid, N,N-Di-methylacrylamid, N-Methylmethacrylamid, N-Ethylacrylamid, N-Propylacrylamid und tert.-Butylacrylamid sowie basische (Meth)acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethyl-aminopropylacrylamid, Dimethylaminopropylmethacrylamid und Diethylaminopropylmethacrylamid.

Weiterhin sind als Comonomere (c) geeignet N-Vinylimidazol sowie substituierte N-Vinylimidazole wie z.B. N-Vinyl-2-methyl-imidazol, N-Vinyl-4-methylimidazol, N-Vinyl-5-methylimidazol, N-Vinyl-2-ethylimidazol und N-Vinylimidazoline wie N-Vinyl-imidazolin, N-Vinyl-2-methylimidazolin und N-Vinyl-2-ethyl-imidazolin. N-Vinylimidazole und N-Vinylimidazoline werden außer in Form der freien Basen auch in mit Mineralsäuren oder organischen Säuren neutralisierter oder in quaternisierter Form eingesetzt, wobei die Quaternisierung vorzugsweise mit Dimethylsulfat, Diethylsulfat, Methylchlorid oder Benzylchlorid vorgenommen wird.

Weiterhin sind als Comonomere geeignet:

N-Trimethylammoniumethylacrylamidchlorid, N-Trimethylammoniumethylmethacrylamidchlorid, N-TrimethylammoniumethylmethacrylesterChlorid, N-Trimethylammoniumethylacrylesterchlorid, Trimethylammoniumethylacrylamidmethosulfat, Trimethylammoniumethylmethacrylamidmethosulfat, N-Ethyldimethylamoniummethylacrylamidethosulfat, N-Ethyl-dimethylammoniumethylmethacrylamidethosulfat, Trimethylammonium-propylacrylamidchlorid, Trimethylaamoniumpropylmethäcrylamid, Trimethylammoniumpropylacrylamidmethosulfat, Trimethylammoniumpropylmethacrylamidmethosulfat und N-Ethyldimethylammonium-propylacrylamidethosulfat.

Bevorzugt eingesetzte Monomere der Gruppe (c) sind Acrylsäure, Methacrylsäure, Maleinsäure, N-Vinylformamid, Acrylsäure- und Methacrylsäureester und Vinylacetat.

Als Stärke kommen beispielsweise native Stärken wie Kartoffel-, Weizen-, Mais, Reis- oder Tapiokastärke in Betracht, wobei Kartoffelstärke bevorzugt ist. Bevorzugt werden Stärken mit einem Gehalt an Amylopektin von mindestens 80 %. Ebenso können chemisch modifizierte Stärken wie Hydroxyethyl- oder Hydroxypropylstärken eingesetzt werden oder auch Stärken, die anionische Gruppen enthalten wie z.B. Phosphatstärke, oder auch kationische Stärken, die quaternäre Ammoniumgruppen aufweisen.

Die erfindungsgemäß einzusetzende Stärke wird erhalten, indem man die genannten Stärketypen einem oxidativen, thermischen, sauren oder enzymatischen Abbau unterwirft. Man kann die Stärke jedoch auch einem kombinierten Abbau unterwerfen, z.B. einem hydrolytischen und einem oxidativen Abbau. Um das gewünschte Molgewicht der Stärke einzustellen, baut man sie vorzugsweise enzymatisch ab. Besonders bevorzugt ist ein Stärkeabbau mit Termamyl, wie er üblicherweise zur Verbesserung der Löseeigenschaften der Stärke durchgeführt wird, und ein weiterer Abbau z. B. mit Wasserstoffperoxid, der z. B. kurz vor der nachfolgenden Pfropfcopolymerisation durchgeführt werden kann. In diesem Fall wird Wasserstoffperoxid (ber. als 100%) in Konzentrationen von beispielsweise 0,3 bis 5,0 Gew.-% bezogen auf eingesetzte Stärke, verwendet. Die Menge an Wasserstoffperoxid richtet sich danach, bis zu welchem Molgewicht die Stärke jeweils abgebaut werden soll.

Die so abgebauten Stärken weisen ein mittleres Molgewicht Mn von 500 bis 40.000, bevorzugt 500 bis 10.000 auf, wodurch einerseits eine gute Dispergierung der Emulsionspolymerisate gewährleistet und andererseits eine Ausfällung des Polymerisationsansatzes vermieden wird. Das mittlere Molgewicht der abgebauten Stärke kann nach bekannten Methoden leicht mit Hilfe von gelchromatographischen Analysenverfahren nach Kalibrierung z. B. mit Dextranstandards, ermittelt werden. Zur Charakterisierung geeignen sind auch viskosimetrische Verfahren, wie sie z. B. beschrieben sind in "Methods in Carbohydrate Chemistry"; Volume IV, Academic Press New York and Frankfurt, 1964, S. 127. Die so ermittelte Intrinsic Viskosität der abgebauten Stärken beträgt bevorzugt 0,05 bis 0,12 dl/g.

Die Polymerisation der Monomeren (a), (b) und gegebenenfalls (c) wird in der Regel so durchgeführt, daß zu der wäßrigen Lösung der abgebauten Stärke sowohl die Monomeren, entweder einzeln oder als Mischung, zugesetzt werden als auch der zur Initiierung der Polymerisation in Betracht kommende Redoxinitiator.

Zur Erhöhung der Dispergierwirkung können dem Polymerisationsansatz anionische oder nichtionische niedermolekulare Emulgatoren wie Natriumalkylsulfonat, Natriumdodecylsulfat, Natriumdodecylbenzolsulfonat, Sulfobernsteinsäureester, Fettalkoholpolyglykolether, Alkylarylpolyglykolether usw. zugesetzt werden.Solche Emulgatoren verschlechtern jedoch in der Regel die Leimungswirkung der Polymerdispersionen und führen meist zu einer unerwünschten Schaumbildung bei der Handhabung der Dispersionen. Die Polymerisation wird deshalb vorzugsweise emulgatorfrei durchgeführt.

Geeignet sind jedoch polymere anionische Emulgatoren, die Sulfonsäuregruppen enthalten, z. B. auf Basis von Maleinsäureanhydrid-Copolymerisaten.

Die Polymerisation wird üblicherweise unter Ausschluß von Sauerstoff durchgeführt, bevorzugt in einer Inertgasatmosphare z. B. unter Stickstoff. Während der Polymerisation ist auf gute Durchmischung mit Hilfe eines geeigneten Rührers zu achten.

Die Polymerisation kann sowohl im Zulaufverfahren als auch nach einem batch-Verfahren z.B. bei Temperaturen zwischen 30 und 100°C, bevorzugt zwischen 70 und 95°C durchgeführt werden.

Im Zulaufverfahren, das zur Gewinnung einer feinteiligen Dispersion bevorzugt ist, werden die Monomeren sowie der Radikalstarter in einem Rührwerkskessel gleichmäßig der Stärkelösung zudosiert. Um besondere Effekte zu erzielen, kann auch eine ungleichmäßige oder gestaffelte Zugabe einzelner Komponenten erfolgen. Die Reaktionszeiten liegen beikspielsweise zwischen 0,5 und 10 Stunden, bevorzugt zwischen 0,75 und 4 Stunden.

Zur Initiierung der Polymerisation sind pfropfaktive wasserlosliche Redoxsysteme geeignet. So kann man beispielsweise konventionelle wasserlösliche Starter wie Kaliumperoxodisulfat, Natriumperoxodisulfat, Ammoniumperoxodisulfat, Wasserstoffperoxid usw. zusammen mit mindesntens einem konventionellen Reduktionsmittel wie Natriumsulfit, Natriumdisulfit, Natriumhydrogensulfit, Natriumdithionit, Ascorbinsaure sowie das Natriumsalz der Hydroxymethansulfonsaure usw. als Redoxsystem verwenden. Solche Redoxsysteme führen in den meisten Fällen zu grobteiligeren Dispersionen.

Besonders geeignete Redoxkatalysatoren mit hoher Pfropfaktivität sind wasserlösliche Startersysteme wie Redoxsysteme aus Wasserstoffperoxid und Schwermetallionen wie Cer-, Mangan- oder Eisen(II)salze, wie sie z.B. in Houben-Weyl "Methoden der organischen Chemie 4. Auflage, Band E20, S. 2168" beschrieben sind. Besonders geeignet ist das Redoxsystem aus Wasserstoffperoxid und einem Eisen(II)-salz wie Eisen(II)sulfat, das feinteilige Dispersionen mit hoher Pfropfausbeute liefert. Als Pfropfausbeute wird der Anteil des Polymeren verstanden, der nach Abschluß der Polymerisation chemisch an die Stärke gekoppelt ist. Die Pfropfausbeute sollte zur Erzielung feinteiliger und gut wirksamer Dispersionen möglichst hoch sein.

Die Polymerisation wird üblicherweise so durchgeführt, daß das Schwermetallsalz des Redoxsystems wie z. B. das Eisen(II)salz dem Ansatz bereits vor der Polymerisation zugesetzt wird, während Wasserstoffperoxid gleichzeitig mit den Monomeren, aber getrennt davon zudosiert wird. Eisen(II)salz wird üblicherweise in Konzentrationen von 10 bis 200 mg/l Fe⁺⁺ Ion, bezogen auf die gesamte Dispersion, eingesetzt, wobei auch höhere und niedrigere Konzentrationen möglich sind. Wasserstoffperoxid (ber. als 100%) wird in Mengen von beispielsweise 0,2 bis 6,0 Gew.-%, bezogen auf Monomer, zugesetzt. Diese Menge ist zusätzlich zu der Menge an Wasserstoffperoxid zu rechnen, die zum Stärkeabbau verwendet wird.

Zusätzlich zu den Redoxinitiatoren können konventionelle Starter wie öllösliche oder nur wenig wasserlösliche organische Peroxide oder Azo-Initiatoren mitverwendet werden. Vorteile bietet besonders die Zugabe weiterer Reduktionsmittel, die bevorzugt mit dem Eisensalz vor der Polymerisation vorgelegt werden. Als Reduktionsmittel kommen z. B. Natriumsufit, Natriumdisulfit, Natriumhydrogensulfit, Natriumdithionit, Ascorbinsaure sowie das Natriumsalz der Hydroxymethansulfonsäure in Frage.

Das Molgewicht des aufgepfropften Polymeren kann zusätzlich eingestellt werden durch die Mitverwendung von Kettenüberträgern oder Reglern wie z. B. n-Dodecylmercaptan, t-Dodecylmercaptan, n-Butylmercaptan oder t-Butylmercaptan. Besonders geeignet sind geruchsfreie Regler wie Terpinolene, vgl. EP-A-1191044.

Die Polymerisation wird meistens bei pH-Werten von 2,5 bis 9, vorzugsweise im schwach sauren Bereich bei pH-Werten von 3 bis 5,5 durchgeführt. Der pH-Wert kann vor oder während der Polymerisation mit üblichen Säuren wie Salzsäure, Schwefelsäure oder Essigsaure oder auch mit Basen wie Natronlauge, Kalilauge, Ammoniak, Ammoniumcarbonat usw. auf den gewünschten Wert eingestellt werden. Bevorzugt ist eine Einstellung des pH-Wertes der wäßrigen Polymerdispersionen auf 5 bis 7 im Anschluß an die Polymerisation durch Zugabe von Natronlauge, Kalilauge oder Ammoniak.

Die Konzentration der erfindungsgemäßen Dispersionen beträgt beispielsweise 10 bis 40 Gew.-%, bevorzugt 18 bis 40 Gew.-%. Eine 25%ige wäßrige Polymerdispersion hat beispielsweise eine Viskosität von 3 und 300 mPa • s.

Die erfindungsgemäßen Dispersionen weisen eine sehr niedrige Teilchengröße auf, z.B. liegt sie unterhalb von 120 nm. Die mittlere Teilchengröße der dispergierten Polymerteilchen beträgt vorzugsweise 50 bis 100 nm. Die Teilchengröße kann z. B. durch Laserkorrelationsspektroskopie oder durch Trübungsmessung bestimmt werden.

Um die Lagerstabilität der wäßrigen Polymerdispersionen zu erhöhen, ist es vorteilhaft, die im Redoxsystem verwendeten Schwermetallionen im Anschluß an die Polymerisation durch Zugabe mindestens eines Komplexbildners zu binden. Hierfür eignen sich beispielsweise Komplexbildner wie Ethylendiamintetraessigsaure, Nitrilotriessigsaure, Diethylentriaminpentaessigsaure, Polyasparaginsaure, Iminodibernsteinsäure, Citronensäure bzw. ihre Alkali- oder Ammoniumsalze. Die Einsatzmenge der Komplexbildner richtet sich dabei nach der Menge an Schwermetallsalz, das komplexiert werden soll. Üblicherweise werden die Komplexbildner in einer Menge von 1 bis 10 mol, bevorzugt 1,1 bis 5 mol pro mol Schwermetallion eingesetzt.

Die erfindungsgemäßen Polymerdispersionen werden vorzugsweise als Oberflächenleimungsmittel verwendet, können jedoch auch als Masseleimungsmittel eingesetzt werden. Sie weisen meistens einen schwach anionischen Ladungscharakter auf und haben eine nur geringe Neigung zur Schaumbildung. Sie sind geeignet zur Oberflächenleimung aller in der Praxis hergestellten Papierqualitäten, z. B. von alaunhaltigen, alaunfreien, mit Kaolin oder Kreide gefüllten Papieren sowie von Holzschliff oder Altpapier enthaltenden Rohpapieren, die sowohl sauer als auch neutral oder alkalisch hergestellt sein können und die ungeleimt oder auch in der Papiermasse z. B. mit Alkylketendimer oder Alkenylbernsteinsäureanhydrid vorgeleimt sein können.

Die erfindungsgemäßen Dispersionen können mit allen bei der Oberflächenleimung gebräuchlichen Verfahrensmethoden verarbeitet und in der Leimpressenflotte auf die Oberflache von Papier aufgetragen werden. Üblich ist der Einsatz in wäßriger Lösung zusammen mit 5 bis 20 Gew.-% Stärke sowie gegebenenfalls Pigmenten und optischen Aufhellern in der Leimpresse oder in modernen Auftragsaggregaten wie Filmpresse, Speedsizer oder Gateroll.

Die Menge an Leimungsmittel in der Flotte richtet sich nach dem gewünschten Leimungsgrad der auszurüstenden Papiere. Üblicherweise liegt die Konzentration der erfindungsgemäßen Dispersionen in der Flotte zwischen 0,1 und 2,0 Gew.-% Festsubstanz, bevorzugt zwischen 0,2 und 1,0 Gew.-%. Die auf das Papier aufgebrachte Menge wird durch die Naßaufnahme der gegebenenfalls vorgeleimten Papiere bestimmt. Als Naßaufnahme ist die Menge an Leimpressenflotte zu verstehen, die bezogen auf den trockenen Faserstoff, von diesem aufgenommen werden kann und die u. a. durch die Vorleimung in der Papiermasse beeinflußt werden kann. In Abhängigkeit von der Naßaufnahme liegt die Menge des vom Papier aufgenommenen Leimungsmittels in den meisten Fällen bei 0,03 bis 1,2 Gew.-% Festsubstanz, bezogen auf trockenen Faserstoff, bevorzugt zwischen 0,1 und 0,8 Gew.-%.

Die Leimpressenflotten können zusätzlich feinteilige Pigmente zur Verbesserung der Bedruckbarkeit enthalten wie z. B. Kreide, gefälltes Calciumcarbonat, Kaolin, Titandioxid, Bariumsulfat oder Gips. Üblich beim Einsatz auf graphischen Papieren ist weiterhin der Zusatz von optischen Aufhellern zur Erhöhung des Weißgrades, gegebenenfalls unter Zusatz von Carriern wie z. B. Polyethylenglykol, Polyvinylalkohol oder Polyvinylpyrrolidon. Besonders vorteilhaft ist die gute Verträglichkeit der erfindungsgemäßen Dispersionen mit optischen Aufhellern, so daß Papiere mit hohem Weißgrad erhalten werden können.

Ebenso besonders vorteilhaft ist die Unempfindlichkeit der erfindungsgemäßen Dispersionen gegen Zusatz von Elektrolyten wie Na-, Ca- oder Al-Ionen, die in vielen Fällen z. B. durch Migration aus dem zu verarbeitenden Rohpapier in der Leimpressenflotte enthalten sein können oder auch gezielt zur Erhöhung der Leitfähigkeit zugesetzt werden.

Die erfindungsgemäßen Leimungsmitteldispersionen sind besonders zur Herstellung graphischer Papiere geeignet, die für alle üblichen modernen Druckverfahren verwendet werden. Beim Inkjetdruck sind z. B. eine hohe Tintenadsorptionsfähigkeit und eine schnelle Trocknung ohne Durchschlagen gefordert mit gleichzeitig gutem Ink hold-out, Erhalt einer hohen Farbdichte und einer hohen Auflösung sowie einer guten Wisch- und Wasserfestigkeit. Im Farbdruck ist eine hohe Kantenschärfe gefordert, wobei die einzelnen Farbtinten nicht ineinander verlaufen dürfen und eine hohe Farbstärke, Brillanz und Lichtechtheit aufweisen sollen. Diese Anforderungen können durch die erfindungsgemäßen Dispersionen in hervorragender Weise erfüllt werden.

Für den Einsatz der mit den erfindungsgemäßen Dispersionen ausgerüsteten Papieren bei elektrophotographischen Druckverfahren wie in Laserdruckern und Kopiergeräten ist gleichzeitig eine gute Toneradhäsion gefordert, d. h. der Toner muß mit hoher Wischfestigkeit auf dem Papier haften. Auch diese Forderung kann durch den Einsatz der erfindungsgemäßen Dispersionen, inbesondere auf z. B. mit Alkyldiketen vorgeleimten Papieren, in hervorragender Weise erfüllt werden.

Die in den Beispielen angegebenen Teile sind Gewichtsteile, die Angaben in % sind Gewichtsprozent, sofern aus dem Zusammenhang nichts anderes hervorgeht.

### Beispiele

### Herstellung von erfindungsgemäßen Polymerdispersionen

### Beispiel 1

In einem Polymerisationsgefäß, das mit Rührer, Rückflußkühler, Dosiervorrichtungen und Einrichtung zum Arbeiten unter Stickstoffatmosphäre ausgestattet war, wurden 9 kg einer Stärke (Amylex 15 Südstärke) und 29,78 kg Wasser vorgelegt und unter Rühren innerhalb von 25 Minuten auf eine Temperatur von 85°C erwärmt. Dann fügte man 0,12 kg einer 25%igen wäßrigen Calciumacetatlösung und 0,226 kg einer 0,015 %igen handelsüblichen Enzymlösung (α-Amylase) zu. Nach 30 Minuten wurde der enzymatische Stärkeabbau durch Zugabe von 0,6 kg 100%ige Essigsäure abgestoppt. Das Molekulargewicht Mₙ der abgebauten Stärke betrug 6000. Dann fügte man außerdem 0,15 kg einer 10%igen wäßrigen Eisen-II-sulfatlösung zu. Die Temperatur der Reaktionsmischung wurde auf 85°C gehalten. Bei dieser Temperatur gab man dann innerhalb von 120 Minuten eine Mischung aus 24,6 kg Styrol, 5,4 kg Butadien-1,3 und 1,5 tertiär-Dodecylmercaptan, 0,038 kg einer 40 %igen wäßrigen Emulgator K 30 Lösung und 10,1 kg Wasser zu. Separat davon wurden innerhalb von 30 Minuten 6 kg einer 15%igen Wasserstoffperoxidlösung und danach innerhalb von 105 Minuten 2 kg einer 15%igen Wasserstoffperoxidlösung hinzugegeben. Anschließend dosierte man innerhalb von 60 Minuten bei 60 °C 1 kg einer 10%igen wäßrigen tertiär-Butylhydroperoxid Lösung. Danach wurde die Dispersion mit 0,225 kg einer 40 %igen Trilon B Lösung und 1,2 kg einer 25 %igen wäßrigen Natronlauge versetzt und anschließend für 4 Stunden bei 10 kg Dampf pro Stunde physikalisch desodoriert. Man erhielt eine wäßrige Dispersion mit einem Feststoffgehalt von 40 %, einem LD-Wert von 80 und einem Teilchendurchmesser von 114 nm.

### Beispiel 2

In einem Polymerisationsgefäß, das mit Rührer, Rückflußkühler, Dosiervorrichtungen und Einrichtung zum Arbeiten unter Stickstoffatmosphäre ausgestattet war, wurden 9 kg einer Stärke (Amylex 15 Südstärke) und 29,78 kg Wasser vorgelegt und unter Rühren innerhalb von 25 Minuten auf eine Temperatur von 85°C erwärmt. Dann fügte man 0,12 kg einer 25%igen wäßrigen Calciumacetatlösung und 0,226 kg einer 0,21 %igen handelsüblichen Enzymlösung (α-Amylase) zu. Nach 30 Minuten wurde der enzymatische Stärkeabbau durch Zugabe von 0,6 kg 100%ige Essigsäure abgestoppt. Die abgebaute Stärke hatte ein Molekulargewicht Mₙ von 6000. Man fügte dann außerdem 0,15 kg einer 10%igen wäßrigen Eisen-II-sulfatlösung zu. Die Temperatur der Reaktionsmischung wurde auf 85°C gehalten. Bei dieser Temperatur gab man dann innerhalb von 120 Minuten eine Mischung aus 24,6 kg Styrol, 5,4 kg Butadien und 0,6 kg Terpinolene, 0,038 kg einer 40 %igen wäßrigen Emulgator K 30 Lösung und 10,1 kg Wasser. Separat davon wurde innerhalb von 30 Minuten 6 kg einer 15%igen wäßrigene Wasserstoffperoxidlösung und danach innerhalb von 105 Minuten 2 kg einer 15%igen Wasserstoffperoxidlösung hinzugegeben. Anschließend dosierte man innerhalb von 60 Minuten bei 60 °C 1 kg einer 10%igen wäßrigen tertiär-Butylhydroperoxid-Lösung. Danach wurde die Dispersion mit 0,225 kg einer 40 %igen Trilon B Lösung und 1,2 kg einer 25 %igen wäßrigen Natronlauge versetzt und anschließend für 4 Stunden bei 10 kg Dampf pro Stunde physikalisch desodoriert. Man erhielt eine wäßrige Dispersion mit einem Feststoffgehalt von 40 %, einem LD-Wert von 94 und einem Teilchendurchmesser von 81 nm.

### Vergleichsbeispiel 1 (Beispiel 1 der EP-A-0 735 065)

### Erste Verfahrensstufe

In einem Doppelmantelrührbehälter mit Flügelrührer, Rückflußkühler und N₂-Zuleitung wurden 500 Teile Wasser vorgelegt und unter Rühren 126 Teile Kartoffelstärkeacetatester, Substitutionsgrad 0,03 zugegeben. Anschließend versetzte man mit 0,3 Teilen α-Amylase LP, heizte auf 80°C und hielt bei dieser Temperatur 2 Stunden. Nach Zugabe von 3 Teilen Natriumperoxodisulfat, gelöst in 15 Teilen Wasser wurde eine Mischung von 30 Teilen Styrol, 15 Teilen n-Butylacrylat und 1 Teil Acrylsäure über einen Zeitraum von 40 Minuten kontinuierlich dosiert. Nach Ende des Zulaufs rührte man weitere 60 Minuten bei 80°C.

### Zweite Verfahrensstufe

Zur vorliegenden Dispersion der ersten Verfahrensstufe gab man bei 80°C 1 Teil Hydroxymethansulfinsäure-Natriumsalz gelöst in 10 Teilen Wasser zu. Unmittelbar danach wurden bei gleichem Dosierbeginn, aber getrennt voneinander die Mischung von 90 Teilen Styrol und 45 Teilen n-Butylacrylat, die Mischung von 16 Teilen Trimethylammoniumethylmethacrylat-Chlorid in 14 Teilen Wasser und die Mischung von 3 Teilen Wasserstoffperoxid in 35 Teilen Wasser über einen Zeitraum von 150 Minuten kontinuierlich zudosiert. Nach Ende der Dosierung rührte man 20 Minuten bei 85°C nach und erhielt nach dem Abkühlen die koagulatfreie Polymerisatdispersion mit einem Feststoffgehalt von 33% und einem pH-Wert von 5,5 und einer mittleren Teilchengröße von 110 nm.

### Vergleichsbeispiel 2 (Beispiel 3 der EP-A-0 735 065)

### Erste Verfahrensstufe

In einem 11 Doppelmantelrührbehälter mit Flügelrührer, Rückflußkühler und N₂-Zuleitung wurden 500 Teile entionisiertes Wasser vorgelegt und unter Rühren 315 Teile einer heißlöslichen oxydativ abgebauten Kartoffelstärke zugegeben. Danach gab man 0,3 Teilen α-Amylase LP zu und heizte auf 80°C. Diese Temperatur wurde 2 Stunden gehalten und anschließend 3 Teile 37%ige Formaldehydlösung zugegeben. Nach Zugabe von weiteren 3 Teilen Natriumperoxodisulfat wurde innerhalb von 35 Minuten eine Mischung aus 15 Teilen Styrol, 30 Teilen n-Butylacrylat und 2 Teilen Acrylsäure kontinuierlich zudosiert. Man ließ noch 1 Stunde nachpolymerisieren.

### Zweite Verfahrensstufe

Zur vorliegenden Dispersion der ersten Verfahrensstufe wurde bei 82°C 1 Teil Hydroxymethansulfinsäure-Natriumsalz in 10 Teilen Wasser gelöst zugegeben. Unmittelbar danach wurden bei gleichem Dosierbeginn getrennt voneinander eine Lösung von 3 Teilen Wasserstoffperoxid in 10 Teilen Wasser und eine Lösung von 30 Teilen Trimethylammoniumethylmethacrylat-Chlorid in 20 Teilen Wasser und eine Mischung von 90 g Styrol und 60 g n-Butylacrylat über eine Zeit von 120 Minuten kontinuierlich dosiert. Man ließ noch eine Stunde bei dieser Temperatur nachpolymerisieren und erhielt nach Zugabe von 9 Teilen 20%iger Natronlauge eine koagulatfreie Dispersion.

### Vergleichsbeispiel 3 (Beispiel 1 der EP-A-0 257 412)

In einem 1 1-Vierhalskolben, der mit Rührer, Rückflußkühler, Dosiervorrichtungen und Einrichtung zum Arbeiten unter Stickstoffatmosphäre ausgestattet war, wurden 31,8 g einer oxidativ abgebauten Stärke und 219 g Wasser vorgelegt und unter Rühren 30 Minuten auf eine Temperatur von 85°C erwärmt. Dann fügte man 1 g einer 1%igen wäßrigen Calciumacetatlösung und 1,6 g einer 1 %igen handelsüblichen Enzymlösung (α-Amylase) zu. Nach 20 Minuten wurde der enzymatische Stärkeabbau durch Zugabe von 4 g Eisessig abgestoppt. Die Intrinsic-Viskosität der Stärke betrug nach dieser Behandlung 0,21 dl/g. Man fügte außerdem 7 g einer 1 %igen wäßrigen Eisen-II-sulfatlösung und 0,34 g eines 30%igen Wasserstoffperoxids zu. Die Temperatur der Reaktionsmischung wurde auf 85°C gehalten. Bei dieser Temperatur gab man dann innerhalb von 1 Stunde eine Mischung aus 40 g Acrylnitril und 33,5 g n-Butylacrylat und separat davon ebenfalls innerhalb einer Stunde 61 ml einer 0,7%igen Wasserstoffperoxidiösung zu. Nachdem die gesamten Monomeren zudosiert waren, polymerisierte man noch eine Stunde bei einer Temperatur von 85°C nach. Man erhielt eine Dispersion mit einem Feststoffgehalt von 26,3%. Der LD-Wert der Dispersion betrug 96%.

### Vergleichsbeispiel 4 (Beispiel 2 von JP-A-58/115-196)

Es wurden in einem mit einem Rührer und einem Rückflußkühler versehenen 2-1-Kolben 500 Teile einer 6,6%igen wäßrigen Lösung einer oxidativ abgebauten Kartoffelstärke vorgelegt. Die abgebaute Stärke hatte eine Intrinsic-Viskosität ηᵢ von 0,27 dl/g und einen Substitutionsgrad von 0,034 Mol Carboxylgruppen pro Mol Glukoseeinheit. Zu der auf 80-90°C erwärmten Vorlage gab man dann 44 Teile Styrol, 71,7 Teile n-Butylacrylat und 21,7 Teile tert.-Butylacrylat sowie 3 Teile Kaliumperoxodisulfat in 50 Teilen Wasser. Man erhielt eine anionische Polymerdispersion mit einem Feststoffgehalt von 25% und einem LD-Wert von 90.

### Vergleichsbeispiel 5 (Kationische Dispersion 2 der EP-A-0 307 816)

In einem Polymerisationsgefäß, das mit Rührer, Dosiervorrichtungen und einer Einrichtung für das Arbeiten unter Stickstoff ausgestattet war, wurden unter Rühren 20,7 Teile einer 82%igen wäßrigen kationischen Kartoffelstärke (ηᵢ=0,1 dl/g, Substitutionsgrad 0,025 mol Stickstoff pro Mol Glucoseeinheit) in 133 Gew.-Teilen Wasser bei 85°C gelöst. Man fügte 3,7 Teile Eisessig und 0,03 Teile Eisensulfat (FeSO₄*7H₂O) zu, gab dann 0,8 Teile 30%iges Wasserstoffperoxid zu und nach 20 Minuten 0,8 g 30%iges Wasserstoffperoxid. Man dosierte dann innerhalb von 2 Stunden eine Emulsion von 44 Teilen n-Butylacrylat und 39 Teilen Styrol in einer Lösung von 0,045 Teilen Natriumlaurylsulfat in 29 Teilen Wasser und gleichbeginnend damit aus einem zweiten Zulaufgefäß 14 Teile einer 5,5%igen Wasserstoffperoxidlösung. Nach Beendigung der Monomer- und der Wasserstoffperoxid-Zugabe wurde das Reaktionsgemisch noch eine Stunde bei 85°C nachpolymerisiert. Man erhielt eine kationische Dispersion mit einem Feststoffgehalt von 34% und einem LD-Wert von 86.

Die nach den Beispielen 1 und 2 und den Vergleichsbeispielen 1 bis 5 hergestellten wäßrigen Polymerdispersionen wurden bezüglich ihrer Wirksamkeit als Oberflächenleimungsmittel für Papier geprüft. Man ermittelte jeweils den Cobb-Wert nach DIN 53132 und die Tintenschwimmdauer nach DIN 53126.

Als Testpapier verwendete man ein nicht vorgeleimtes, mit PCC (präzipitiertes Calciumcarbonat) gefülltes Papier aus 70% Birken- und 30% Kiefernsulfat. Um die Oberflächenleimungswirkung der nach den Beispielen und den Vergleichsbeispielen hergestellten wäßrigen Polymerdispersionen zu bestimmen, verdünnte man sie jeweils auf einen Polymergehalt von 2 g/l und trug sie mit Hilfe einer Leimpresse auf das oben beschriebene Testpapier auf. Die Testpapiere wurden danach getrocknet, klimatisiert und nach den vorstehend genannten Methoden geprüft. Die dabei ermittelten Werte für die Tintenschwimmdauer und den Cobb-Wert sind in der Tabelle angegeben. Je niedriger der Cobb-Wert und je höher die Tintenschwimmdauer, um so wirksamer ist das Leimungsmittel:

| Leimungsmittel hergestellt nach | Cobb / g/m2 | Tintenschwimmdauer / min. |
|---|---|---|
| Beispiel 1 | 27 | 35 |
| Beispiel 2 | 33 | 35 |
| Vergleichsbeispiel 1 | 92 | 0 |
| Vergleichsbeispiel 2 | 106 | 0 |
| Vergleichsbeispiel 3 | 48 | 7 |
| Vergleichsbeispiel 4 | 40 | 12 |
| Vergleichsbeispiel 5 | 55 | 4 |

## Patentansprüche

1. Wäßrige Polymerdispersionen auf Basis von Copolymerisaten aus Vinylaromaten und Butadien, **dadurch gekennzeichnet, daß** sie erhältlich sind durch radikalisch initiierte Copolymerisation von
(a) 0,1 bis 99,9 Gew.-% Styrol und/oder Methylstyrol,
(b) 0,1-99,9 Gew.-% Butadien-1,3 und/oder Isopren und
(c) 0 bis 40 Gew.-% anderen ethylenisch ungesättigten copolymerisierbaren Monomeren, wobei die Summe der Monomeren (a), (b) und (c) immer 100 beträgt,
in Gegenwart von 10 bis 40 Gew.-%, bezogen auf die eingesetzten Monomeren, mindestens einer abgebauten Stärke mit einem Molgewicht Mn von 500 bis 40.000 und von wasserlöslichen Redoxkatalysatoren, wobei man als Redoxkatalysator eine Kombination aus Wasserstoffperoxid und mindestens einem Schwermetallsalz aus der Reihe der Cer-, Mangan- und Eisen (II) salze einsetzt.

2. Wäßrige Polymerdispersion nach Anspruch 1, **dadurch gekennzeichnet, daß** man bei der Copolymerisation eine Mischung aus (a) Styrol und (b) Butadien-1,3 einsetzt.

3. Wäßrige Polymerdispersion nach einem der Ansprüche 1 bis 2, **dadurch gekennzeichnet, daß** sie einen Feststoffgehalt von 10 bis 50% aufweisen.

4. Wäßrige Polymerdispersion nach einem der Ansprüche 1 bis 3, **dadurch gekennzeichnet, daß** die Copolymeren eine Teilchengröße von 40 nm bis 2 µm haben.

5. Verfahren zur Herstellung von wäßrigen Copolymerdispersionen auf Basis von Vinylaromaten und Butadien durch Copolymerisieren von Vinylaromaten und Butadien in wäßrigem Medium in Gegenwart von Stärke und wasserlöslichen Redoxkatalysatoren, **dadurch gekennzeichnet, daß** man bei der Copolymerisation
(a) 0,1 bis 99,9 Gew.-% Styrol und/oder Methylstyrol,
(b) 0,1-99,9 Gew.-% Butadien-1,3 und/oder Isopren und
(c) 0 bis 40 Gew.-% anderen ethylenisch ungesättigten copolymerisierbaren Monomeren einsetzt,
wobei die Summe der Monomeren (a), (b) und (c) immer 100 beträgt, die Copolymerisation in Gegenwart von 10 bis 40 Gew.-%, bezogen auf die eingesetzten Monomeren, mindestens einer abgebauten Stärke mit einem Molgewicht Mn von 500 bis 40.000 durchführt und man als Redoxkatalysator eine Kombination aus Wasserstoffperoxid und mindestens einem Schwermetallsalz aus der Reihe der Cer-, Mangan- und Eisen (II) salze einsetzt.

6. Verfahren nach Anspruch 5, **dadurch gekennzeichnet, daß** man eine Monomermischung aus
(a) 50 bis 99 Gew.-% Styrol und /oder Methylstyrol,
(b) 1 bis 50 Gew.-% Butadien und/oder Isopren und
(c) 0 bis 40 Gew.-% anderen ethylenisch ungesättigten copolymerisierbaren Monomeren
in einer wäßrigen Lösung einer enzymatisch abgebauten nativen Stärke mit einem Redoxkatalysator aus Wasserstoffperoxid und Schwermetallionen aus der Gruppe der Cer-, Mangan- und Eisen(II) salze.

7. Verfahren nach Anspruch 5 oder 6, **dadurch** gekennzeichet, daß man die Copolymerisation in Gegenwart eines Komplexbildners für Eisen in Konzentrationen von 1 bis 5 mol pro mol Eisensalz durchführt.

8. Verwendung der wäßrigen Polymerdispersionen nach einem der Ansprüche 1 bis 4 als Masse- und/oder Oberflächenleimungsmittel für Papier, Pappe und Karton.

## Claims

1. An aqueous polymer dispersion based on copolymers of vinylaromatics and butadiene, which is obtainable by free radical copolymerization of
(a) from 0.1 to 99.9% by weight of styrene and/or methylstyrene,
(b) 0.1-99.9% by weight of 1,3-butadiene and/or isoprene and
(c) from 0 to 40% by weight of other ethylenically unsaturated copolymerizable monomers, the sum of the monomers (a), (b) and (c) always being 100%,
in the presence of from 10 to 40% by weight, based on the monomers used, of at least one degraded starch having a molecular weight Mn of from 500 to 40 000 and of water-soluble redox catalysts, the redox catalyst used being a combination of hydrogen peroxide and at least one heavy metal salt from the series consisting of the cerium, manganese and iron(II) salts.

2. The aqueous polymer dispersion according to claim 1, wherein a mixture of (a) styrene and (b) 1,3-butadiene is used in the copolymerization.

3. The aqueous polymer dispersion according to either of claims 1 and 2, which has a solids content of from 10 to 50%.

4. The aqueous polymer dispersion according to any of claims 1 to 3, wherein the copolymers have a particle size of from 40 nm to 2 µm.

5. A process for the preparation of aqueous copolymer dispersions based on vinylaromatics and butadiene by copolymerization of vinylaromatics and butadiene in an aqueous medium in the presence of starch and water-soluble redox catalysts, wherein
(a) from 0.1 to 99.9% by weight of styrene and/or methylstyrene,
(b) 0.1-99.9% by weight of 1,3-butadiene and/or isoprene and
(c) from 0 to 40% by weight of other ethylenically unsaturated copolymerizable monomers
are used in the copolymerization, the sum of the monomers (a), (b) and (c) always being 100, the copolymerization being carried out in the presence of from 10 to 40% by weight, based on the monomers used, of at least one degraded starch having a molecular weight Mn of from 500 to 40 000 and the redox catalyst used being a combination of hydrogen peroxide and at least one heavy metal salt from the series consisting of the cerium, manganese and iron(II) salts.

6. The process according to claim 5, wherein a monomer mixture comprising
(a) from 50 to 99% by weight of styrene and/or methylstyrene,
(b) from 1 to 50% by weight of butadiene and/or isoprene and
(c) from 0 to 40% by weight of other ethylenically unsaturated copolymerizable monomers
is polymerized in an aqueous solution of an enzymatically degraded natural starch with a redox catalyst comprising hydrogen peroxide and heavy metal ions from the group consisting of the cerium, manganese and iron(II) salts.

7. The process according to claim 5 or 6, wherein the copolymerization is carried out in the presence of a complexing agent for iron in concentrations from 1 to 5 mol per mole of iron salt.

8. The use of an aqueous polymer dispersion according to any of claims 1 to 4 as an engine size and/or surface size for paper, board and cardboard.

## Revendications

1. Dispersions polymères aqueuses à base de copolymères de substances vinyl-aromatiques et de butadiène, **caractérisées en ce qu'**elles peuvent être obtenues par copolymérisation amorcée par voie radicalaire
(a)de 0,1 à 99,9 % en poids de styrène et/ou de méthylstyrène,
(b)de 0,1 à 99,9 % en poids de butadiène-1,3 et/ou d'isoprène, et
(c)de 0 à 40 % en poids d'autres monomères copolymérisables éthyléniquement insaturés, la somme des monomères (a), (b) et (c) étant toujours de 100,
en présence de 10 à 40 % en poids, par rapport aux monomères mis en oeuvre, d'au moins un amidon dégradé ayant un poids moléculaire Mn de 500 à 40.000, et de catalyseurs d'oxydoréduction solubles dans l'eau, une combinaison de peroxyde d'hydrogène et d'au moins un sel de métal lourd de la série des sels de cérium, de manganèse et de fer (II) étant mise en oeuvre comme catalyseur d'oxydoréduction.

2. Dispersion polymère aqueuse suivant la revendication 1, **caractérisée en ce qu'**on met en oeuvre, au cours de la copolymérisation, un mélange (a) de styrène et (b) de butadiène-1,3.

3. Dispersion polymère aqueuse suivant l'une des revendications 1 et 2, **caractérisée en ce qu'**elle présente une teneur en matière solide de 10 à 50 %.

4. Dispersion polymère aqueuse suivant l'une des revendications 1 à 3, **caractérisée en ce que** les copolymères ont une taille de particule de 40 nm à 2 µm.

5. Procédé de préparation de dispersions aqueuses de copolymère à base de substances vinyl-aromatiques et de butadiène, par copolymérisation de substances vinyl-aromatiques et de butadiène dans un milieu aqueux en présence d'amidon et de catalyseurs d'oxydoréduction solubles dans l'eau, **caractérisé en ce que**, lors de la copolymérisation, on met en oeuvre
(a) 0,1 à 99,9 % en poids de styrène et/ou de méthylstyrène,
(b) 0,1 à 99,9 % en poids de butadiène-1,3 et/ou d'isoprène, et
(c)0 à 40 % en poids d'autres monomères copolymérisables éthyléniquement insaturés,
la somme des monomères (a), (b) et (c) étant toujours de 100,
on effectue la copolymérisation en présence de 10 à 40 % en poids, par rapport aux monomères mis en oeuvre, d'au moins un amidon dégradé ayant un poids moléculaire Mn de 500 à 40.000 et on met en oeuvre, comme catalyseurs d'oxydoréduction, une combinaison de peroxyde d'hydrogène et d'au moins un sel de métal lourd de la série des sels de cérium, de manganèse et de fer (II).

6. Procédé suivant la revendication 5, **caractérisé en ce qu'**on polymérise un mélange de monomères à base
(a) de 50 à 99 % en poids de styrène et/ou de méthylstyrène,
(b) de 1 à 50 % en poids de butadiène et/ou d'isoprène, et
(c) de 0 à 40 % en poids d'autres monomères copolymérisables éthyléniquement insaturés,
dans une solution aqueuse d'un amidon natif dégradé par voie enzymatique, avec un catalyseur d'oxydoréduction à base de peroxyde d'hydrogène et d'ions de métal lourd du groupe des sels de cérium, de manganèse et de fer (II).

7. Procédé suivant la revendication 5 ou 6, **caractérisé en ce qu'**on effectue la copolymérisation en présence d'un agent complexant pour du fer, en des concentrations de 1 à 5 moles par mole de sel de fer.

8. Utilisation des dispersions aqueuses de polymère suivant l'une des revendications 1 à 4, comme agent de collage en pile et/ou en surface pour du papier, du carton-pâte et du carton.
